## Europäisches Patentamt

(19) **European Patent Office**

**Office européen des brevets**

(11) Publication number: **0 020 055**
**B1**

## EUROPEAN PATENT SPECIFICATION

(45) Date of publication of patent specification: **10.12.86**

(21) Application number: **80301589.0**

(22) Date of filing: **15.05.80**

(51) Int. Cl.⁴: **B 01 D 3/30, B 01 D 53/18, B 01 D 11/04**

(54) Process and apparatus for effecting mass transfer.

(30) Priority: **31.05.79 GB 7918924**

(43) Date of publication of application:
**10.12.80 Bulletin 80/25**

(45) Publication of the grant of the patent:
**10.12.86 Bulletin 86/50**

(84) Designated Contracting States:
**AT BE CH DE FR GB IT LI NL SE**

(56) References cited:
**EP-A-0 002 568
EP-A-0 023 745
DE-A- 193 260
DE-A-2 162 280
FR-A-1 489 522
FR-A-2 323 429
GB-A- 757 149
US-A-2 493 265
US-A-3 389 970**

The file contains technical information
submitted after the application was filed and
not included in this specification

(73) Proprietor: **IMPERIAL CHEMICAL INDUSTRIES PLC**
**Imperial Chemical House Millbank**
**London SW1P 3JF (GB)**

(72) Inventor: **Ramshaw, Colin**
**4 The Spinney Norley**
**Cheshire (GB)**
Inventor: **Mallinson, Roger Howard**
**18 Cartmell Close Clifton Road**
**Runcorn Cheshire (GB)**

(74) Representative: **Thomas, Ieuan et al**
**Imperial Chemical Industries PLC Legal**
**Department: Patents PO Box 6**
**Welwyn Garden City Herts, AL7 1HD (GB)**

(56) References cited:
**Filtration & Separation, May/June 1973, pp. 321-325
S.W.Dahlbeck: "A new centrifugal gaswasher - new possibilities for the treatment of coke oven gas", 8th International Gas Conference, Stockholm, 1961
Colpacks Issue no.4, 1982 - 10(a), published by KnitMesh Ltd., England**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to apparatus for effecting mass transfer between two fluid phases, at least one of which is a liquid, and to the use of such apparatus.

By "mass transfer" we mean transfer to a first fluid phase from a second fluid phase, or vice versa, of at least a proportion of a substance which is a solute for the first fluid phase wherein the first fluid phase (a) is a liquid, (b) is substantially immiscible with the second fluid phase and (c) has a density greater than that of the second fluid phase. Absorption and distillation, processes which are widely used in the chemical and petrochemical industries, are typical mass transfer processes. Where a mass transfer process involves transfer of a solute from a liquid to a gas, or vice versa, the process may be "gas-film controlled", or "liquid-film controlled". In "gas-film controlled" mass transfer processes, e.g. the absorption of ammonia into water from an ammonia/air mixture, the rate of mass transfer is limited predominantly by diffusion of the solute through the gas phase. In "liquid-film controlled" mass transfer processes, e.g. the absorption of oxygen into water from air, the rate of mass transfer is limited predominantly by diffusion of the solute through the liquid phase. Where a mass transfer process involves transfer of a solute from a first liquid to a second liquid the process is "liquid-film controlled" and the rate of mass transfer is limited predominantly by diffusion of the solute through one of the liquids.

Rates of mass transfer are conveniently expressed as mass transfer coefficients. For gas-film controlled and liquid-film controlled mass transfer processes they are designated $K_G$ and $K_L$ respectively.

It is known from UK Patent Specification No. 757,149 and "A new centrifugal gaswasher—new possibilities for the treatment of coke oven gas" (S. W. Dahlbeck Eighth International Gas Conference, Stockholm, 1962, pages 5—15) that the rate of mass transfer between two fluid phases may be increased by subjecting the fluids to an acceleration up to approximately 2000 metres seconds$^{-2}$ while they flow through a permeable element which is formed from metal plates or conventional fillers in a rotary mass transfer apparatus. It is known from US 2,259,762 that the permeable element in a rotary mass transfer apparatus may be made from fibrous or filamentous materials, e.g. wire mesh. It is known from our European Patent Applications Nos. 78300622.4 (EP—A—0002568, priority date ·1 December 1977, publication date 27 June 1979) and 80200730.2 (EP—A—0023745, priority date 1 December 1977, publication date 11 February 1981) that the rate of mass transfer between two fluid phases in a rotary mass transfer apparatus may be increased by using a permeable element which has an interfacial area of more than 1500 metres$^2$/metres$^3$ and/or comprises fibres.

We have now found that use in rotary mass transfer apparatus of a permeable element which (a) has a suitable interfacial area, (b) has a voidage of at least 90%, (c) comprises strands, fibres, fibrils or filaments, and (d) is formed from a material which has the mechanical strength to withstand the stress generated in the material during operation of the apparatus such that the voidage of the permeable element does not decrease affords certain advantages.

According to the present invention there is provided rotary apparatus for effecting mass transfer between two fluid phases, at least the first of which is a liquid, which apparatus comprises a permeable element (9) which allows passage of the fluids through the pores thereof, the wall surfaces of the pores providing a tortuous and substantially continuous path over which the fluids may flow with the first fluid flowing away from the axis of rotation, means (4, 13) to charge the fluids to the permeable element and means (14, 19) to discharge at least one of the fluids or a derivative thereof from the permeable element characterised in that the permeable element has a voidage of at least 90% comprises strands, fibres, fibrils or filaments which are point-bonded at nodules and is formed from a material which has the mechanical strength to withstand the stress generated in the material during rotation of the permeable element such that the voidage thereof does not decrease with use.

By "permeable element" we mean an element of apparatus according to the invention which (a) allows passage of the fluids through the pores thereof, the wall surfaces of the said pores providing a tortuous and substantially continuous path over which the fluids may flow and (b) is rotatable to subject the fluids flowing therethrough to a mean acceleration of at least 150 m sec$^{-2}$.

The mean acceleration as hereinafter defined, to which the fluids are subjected in apparatus according to the present invention is preferably greater than about 5000 m sec$^{-2}$, since on increasing the mean accleration to more than about 5000 m sec$^{-2}$, there is often a surprising increase in the rate of mass transfer.

The present invention further provides a process for effecting mass transfer between two fluid phases, at least the first of which is a liquid, which process comprises charging the said fluids to a rotary apparatus for effecting mass transfer between two fluid phases which apparatus comprises a permeable element (9) which allows passage of the fluids through the pores thereof, the wall surfaces of the pores providing a tortuous and substantially continuous path over which the fluids may flow with the first fluid flowing away from the said axis, means (4, 13) to charge the fluids to the permeable element and means (14, 19) to discharge at least one of the fluids or a derivative thereof from the permeable element; rotating the permeable element about an axis such that the fluids are subjected to a mean acceleration of at least 150 m sec$^{-2}$ as they

flow through the pores of the permeable element with the first fluid flowing radially outwards away from the said axis; and collecting at least a portion of one of the fluids or a derivative thereof discharged from the permeable element characterised in that the permeable element has a voidage of at least 90%, comprises strands, fibres, fibrils or filaments and is formed from a material which has the mechanical strength to withstand the stress generated in the material during rotation of the permeable element such that the voidage thereof does not decrease with use.

$$a_m = \left(2\pi\frac{N}{60}\right)^2 \left(\frac{r_o^2 + r_1^2}{2}\right)^{1/2}$$

where N is the rotational speed of the permeable element about the said axis in revolutions per minute, $r_o$ is the distance in metres from the axis of rotation to the radially inner portion of the permeable element, and $r_1$ is the distance in metres from the axis of rotation to the radially outer portion of the permeable element.

By "voidage" we mean the percentage of the total volume of the permeable element which is free space.

By "fluid" we mean a substance or a mixture of substances, which is a gas or a liquid at the conditions of temperature and pressure at which the apparatus of the invention is operated. For example, where the second fluid is a gas it may be one gas or a mixture of gases; the first fluid and/or the second fluid (where it is a liquid) may be a neat liquid or may be a solution of one or more solutes in the liquid, which solute may be a gas, liquid or solid.

The strands, fibres, fibrils or filaments of which the permeable element is comprised may be merely in physical contact with adjacent strands, fibres, fibrils or filaments e.g. as a mass of fibres, they may be mechanically bound to each other, e.g. by knitting or weaving, they may be bonded to each other by use of an adhesive, or they may be point-bonded at nodules, e.g. by melding or by formation as so-called metallic skeleton foam.

The strands, fibres, fibrils or filaments of which the permeable element is comprised preferably have a so-called equivalent diameter of less than 150 μ, more preferably less than 30 μ and/or single strands, fibres, fibrils or filaments define at least a substantial proportion of the pores of the permeable element since this often improves mass transfer. For example, the permeable element may be formed from a tape which is knitted from wire mono-filament.

Equivalent diameter $d_e$ is defined by the equation:

$$d_e = \frac{4 \times \text{Cross-sectional area of strand etc.}}{\text{Perimeter of strand etc.}}$$

("Chemical Engineering" by Coulson and Richardson, Vol 1, 2nd Edition, p 210).

The cross-sectional shape of strands, fibres, fibrils or filaments, where they are employed, may be for example circular, triangular, cruciform or triskellion, although preferably it is circular.

The permeable element preferably has a plane of symmetry in which the axis of rotation lies, e.g. it may be in the form of a permeable rod which is rotated about an axis perpendicular to the axis of the rod and distant the mid-point thereof. Particularly preferably the permeable element has a plurality of planes of symmetry which intersect at a line co-incident with the axis of rotation, e.g. it may be in the form of a permeable rod which is rotated about an axis perpendicular to the axis of the rod and co-incident with the mid-point thereof. More particularly preferably the permeable element has an axis of symmetry which co-incides with the axis of rotation, e.g. the permeable element is in the form of an annulus which is rotated about its axis of symmetry. Where the permeable element is in the form of an annulus the outer diameter of the annulus is typically in the range 25 cm to 5 metres, and the inner diameter is typically in the range 5 cm to 100 cm.

The permeable element may be an integral whole or a plurality of discrete components. Where the permeable element is an integral whole it may be formed with pores, e.g. cast as a foam; or have pores formed therein, e.g. cast as a solid block around salt particles which are then dissolved away; or be arranged to form pores between the parts thereof, e.g. a coil of wire. Where the permeable element comprises a plurality of discrete components, the individual components may be permeable, in which case a proportion of the pores are through the components and a proportion of the pores are between the components; alternatively the individual components may be non-permeable. It is often preferred that the permeable element is an integral whole and/or is mechanically self-supporting since this often reduces the possibility of the voidage thereof being decreased with use. It is often convenient to form the permeable element from suitably shaped portions, e.g. segments or arcuate portions, of a mechanically self-supporting material.

The permeable element may be formed from any material which has the mechanical strength to withstand the stress generated in the material during rotation of the permeable element at the rotational speeds employed. Preferably the material is resistant to attack by or reaction with the fluids with which it may be in physical contact. Typically, the material from which the permeable element is formed is a glass, a plastic, e.g. a silicone resin or polytetrafluoroethylene, or a chemically resistant metal, e.g. stainless steel, nickel, titanium or tantalum. Alternatively the material may be a composite of two or more materials in an appropriate disposition. For example, it may comprise a corrosion resistant coating, e.g. of glass or plastic, on a corrodible support, e.g. corrodible metal strands.

While the permeable element is conveniently homogeneous we do not exclude the possibility that the permeable element may be a composite. For example, an annulus of wire mesh which may be surrounded by an annulus of metallic skeleton foam.

Typical examples of suitable materials for use as permeable elements in apparatus of the present invention include *inter alia*, a coil of woven tape, a sintered mass, knitted or woven wire cloth, a crumpled mesh, skeleton foam, preferably metallic skeleton foam, a random mat of fibres, or a mass of fibres.

By "skeleton foam" we mean a relatively rigid reticulate foam which is typically metallic or ceramic. Such a foam is produced by applying a metal coating to an agglomerate of fibres e.g. a felted material or to an open-cell foam, such as an open-cell polyurethane foam, and subsequently leaching out or otherwise removing the fibres or foam to leave a mesh of metal in the form of a multiplicity of thin strands or fibres of metal interconnected in a three dimensional network. By "relatively rigid" we mean that the matrix is capable of withstanding the centrifugal and other loads imposed on it during operation of apparatus according to the present invention without undergoing a significant amount of deformation which would tend to close the pores of the foam and unduly restrict the flow of the fluids therethrough. Metallic skeleton foam also often has the further advantage that it can be readily machined to size and is sufficiently deformable to allow it to be shaped, e.g. by bending into an arcuate portion, suitable for mounting in apparatus according to the present invention.

As the interfacial area for any particular permeable element is increased, the pressure drop across the permeable element increases and the possibility of fouling and flooding of the permeable element increases. Simple experiment will readily reveal a suitable permeable element for any desired speed of rotation and fluid combination.

It will be appreciated that where the permeable element is not mechanically self-supporting, e.g. it comprises an integral whole arranged to form pores between the parts thereof, or a plurality of discrete components, or is a composite, means to retain the permeable element in a desired shape and to maintain the permeability thereof are often necessary. The said means is preferably in the form of a member which is rotatable about the same axis as the permeable element (hereinafter "rotatable member") and in which the permeable element is disposed. Moreover, where the permeable element is mechanically self-supporting it is often preferably disposed in a rotatable member.

Where a rotatable member as hereinbefore defined is employed, the permeable element may be disposed throughout or in a proportion of the rotatable member. The size of the permeable element and its disposition in the rotatable member may be determined by the density and the interfacial area of the permeable element and by the flow characteristics of the fluids. Where the permeable element is disposed in a proportion of the rotatable member it is often preferred that the permeable element is disposed in a radially outer proportion of the rotatable member since as the distance from the axis increases the magnitude of the centrifugal forces which operate on the fluid to form a layer increases and hence the thickness of the layer is decreased. Where the permeable element is disposed in a rotatable member which has an axis of symmetry co-incident with the axis of rotation, the permeable element is preferably distributed symmetrically around the axis so that the rotatable member is dynamically balanced when it is rotated.

The rotatable member as hereinbefore defined, where it is employed, may be constructed of any material which has (a) the mechanical strength to withstand the stress generated in the material during rotation of the rotatable member at the rotational speeds employed and (b) the corrosion resistance to tolerate the environments with which the rotatable member may be in contact during use. Typical materials from which the rotatable member may be constructed include *inter alia* stainless steel, mild steel, brass, aluminium, nickel, Monel. Choice of a suitable material will present no problem to those skilled in the art.

The speed at which the permeable element is rotated will depend *inter alia* on its porosity, the throughput of fluids required and the radial distance over which the fluids flow in the permeable element. The minimum speed at which the permeable element is rotated is often determined by the flow characteristics of the liquid. The maximum speed at which the permeable element may be rotated is governed by the mechanical strength of the permeable element, and where it is employed, by the mechanical strength of the rotatable member. Where a rotatable member is employed and where it is in the form of a hollow stainless steel disc in which the permeable element is disposed, typical rotation speeds are; for a disc of 0.5 metres diameter, 1000—3000 rpm; for a disc of 1 metre diameter, 500—2000 rpm; for a disc of 1.5 metres diameter, 400—1000 rpm. As the speed of rotation increases the thickness of the layer of liquid on the walls of the pores of the permeable element at any particular distance from the axis of rotation decreases.

In general, the speed of rotation will be in the range 50 rpm to 10,000 rpm, preferably in the range 100 rpm to 5,000 rpm and particularly preferably in the range 500 rpm to 2000 rpm.

For a desired mean acceleration and a desired radial distance over which the fluids flow in a permeable element, the speed of rotation of the permeable element may be readily calculated.

While the axis of rotation may be horizontal or vertical or at any angle between, it is often convenient to have the axis vertical. Where a permeable element in the form of an annulus is employed, typically rotary movement is applied to it by a shaft, projecting from the plane of the annulus along the axis thereof, (e.g. from the top and/or bottom of the axis is vertical). The permeable element may be rotated by, for example, a variable speed fluid drive, a pulley which may be driven by a belt from an electric motor, or by turbo-propulsion.

The design of bearings for the rotatable member may be those well known in the engineering art, e.g. radial and thrust bearings of conventional design.

The direction of flow of the second fluid in the process according to the present invention will depend on the relative densities of the two fluids and on their flow rates. Co-current or counter current flow may be operated.

Flow of the liquids through the pores of the permeable element is substantially in planes perpendicular to the axis of rotation, i.e. radial flow, although we do not exclude the possibility that there may be a small component of the flow parallel to the axis. It will be appreciated that by employing a permeable element having a radial thickness substantially greater than its axial length, e.g. a disc-shaped permeable element, and by charging the first fluid substantially uniformly along the axial thickness of the disc the possibility that the flow of the first fluid has an axial component is reduced. For example, where the permeable element is in the shape of a disc it may have a diameter of 80 cm and an axial thickness of 20 cm.

At least the major proportion of the first fluid or a derivative thereof is discharged from the permeable element at or adjacent to the radially outer perimeter thereof. Thus means to at least reduce the discharge of the liquid material distant the radially outer perimeter of the permeable element are provided. For example, where the permeable element is in the shape of an annulus it may be formed with an integral skin on its two planar surfaces, or discs may be held in contact with each of the said planar surfaces, or a rotatable member, where one is employed, may be adapted to prevent the aforesaid discharge distant the radially outer perimeter of the permeable element, e.g. the rotatable member may be a hollow disc in which the annular permeable element is disposed, the planar surfaces of the permeable element forming a seal with the planar surfaces of the hollow disc.

Where counter current flow is employed it will be appreciated that means are necessary distant the axis of rotation and preferably adjacent the radially outer perimeter of the permeable element to charge the permeable element with the second fluid. For example, the permeable element may be supported in a rotatable member to form a space between the radially outer perimeter of the permeable element and the inner surface of the rotatable member into which space the first fluid flows to form a liquid seal through which the second fluid may be charged to the permeable element. Where the second fluid is a mixture of components they may be delivered to the said space through the same or separate delivery means which are conveniently radially directed channels in the base of the rotatable element.

As the first fluid flows radially outwards through the rotating permeable element the pressure to which the first fluid is subjected increases. Thus, where countercurrent flow is employed, it will be appreciated that to charge the permeable element with the second fluid, the second fluid has to be at pressure greater than that of the first fluid at the position on the permeable element at which the permeable element is charged with the second fluid.

Where the permeable element is supported in a rotatable member, means to deliver the first fluid to the permeable element typically comprises an orifice in the rotatable member through which the fluid may flow. Where the rotatable member is a hollow disc the delivery means is conveniently axially disposed, although we do not exclude the possibility that it may be located intermediate the axis of rotation and the means to charge the second fluid to the permeable element. Where the first fluid is a mixture of components, these may be delivered to the permeable element through the same or separate delivery means, e.g. they may be delivered through concentric tubes.

Where a permeable element supported in a rotatable member is employed in apparatus according to the present invention, means to discharge the first fluid or a component or derivative thereof from the rotatable member typically comprises one or more orifices in the periphery of the rotatable member distant the axis of rotation, through which orifice(s) the fluid may issue as a spray. For example, where the rotatable member is a hollow disc in which an annular permeable element is disposed the orifice may conveniently be in the form of a circumferentially extending slit in the wall of the hollow disc and the slit is preferably continuous or the circumferential wall may be provided with a plurality of orifices.

Where a permeable element supported in a rotatable member is employed in apparatus according to the present invention means to discharge the second fluid or a component or derivative thereof from the rotatable member typically comprises one or more orifices in the rotatable member through which the second fluid or a component or derivative thereof may flow. Where the rotatable member is a hollow disc in which an annular permeable element is disposed the orifice is conveniently axially disposed.

Conveniently the permeable element, or the rotatable member, where it is employed, is mounted in a stationary fluid-collecting means, e.g. a housing, in which the fluid-collecting means the fluids or components or derivatives thereof which are discharged from the permeable element distant the axis of rotation may be collected. Moreover, where the stationary fluid-collecting means is in the form of a sealed housing the second fluid may be charged thereto and thence to the permeable element, e.g. via suitably disposed orifices in a rotatable member. It will be appreciated that where counter current flow is effected in apparatus according to the present invention the permeable element and the rotatable member, where it is employed, will be mounted in the fluid collecting means such that the fluid discharged from the permeable element distant the axis of rotation does not contact the fluid discharged adjacent the axis of rotation. Alternatively the permeable element or the rotatable member where it is employed, is provided with a circumferentially extending channel into which the first fluid flows. One or more suitably disposed stationary collecting means, e.g. a fantail scoop, dip into the channel and the rotational speed of the first fluid forces it through the collecting means to a suitable location.

The residence time of the fluids within the permeable element is a function of the radial dimensions of the permeable element, the nature and permeability of the permeable element, the rotational speed, and the flow rate of the fluids. These parameters interact with each other and affect the residence time. For example, where the radius (of a disc shaped permeable element) is increased and the other parameters kept constant the residence time is increased; where the flow rate is increased and the other parameters kept constant the residence time is reduced; where the rotational speed is increased and the other parameters kept constant the residence time is reduced.

It will be appreciated that for the generation in the permeable element of a liquid surface of large area, the first fluid and/or the second fluid where it is a liquid preferably "wets" substantially the whole of the wall surface of the pores of the permeable element. Wetting of the permeable element will depend to a degree on dynamic factors but will be assisted if it is favoured by equilibrium wetting conditions. Thus a fluid having a small interfacial tension with the permeable element will tend to displace from the surface of the pores of the permeable element a fluid having a large interfacial tension with the permeable element, which displacement process is assisted by a small interfacial tension between the two fluids. To improve the "wetting" of the permeable element the surface of the pores of the permeable element are preferably coated with a wetting agent, or a wetting agent is preferably added to at least one of the fluids. For example, where the first fluid is water and the pores of the permeable element have a hydrophobic surface, e.g. the permeable element is a mat of polytetrafluoroethylene fibres, suitable surfactants, e.g. sodium dodecylsulphate or a Monflur surfactant, may be added to the water. Where the first and second fluids are liquids it is often preferred that the wall surfaces of the pores are "wetted" preferentially by the first fluid.

A plurality of permeable elements, each provided with suitable fluid-collecting means, typically a housing, although we do not exclude the possibility that a circumferential channel and associated removal means as hereinbefore described may be employed, may be joined in series fluid flow communication. It will be appreciated that suitable pumps where appropriate may be provided in the lines interconnecting adjacent permeable elements. Optionally the permeable elements are mounted along a common axis. While the fluids may flow co-currently through the series, it is often preferred that counter-current flow operates.

Accordingly the invention further provides apparatus for effecting mass transfer between two fluid phases, the first of which is a liquid, comprising a plurality of permeable elements connected in series such that the fluids flow through the pores of the permeable elements under a mean acceleration of at least 150 m sec$^{-2}$ with the first fluid flowing radially outwards away from the axis of rotation and the wall surfaces of which pores provide a tortuous and substantially continuous surface over which the fluids flow characterised in that each permeable element has a voidage of at least 90%, comprises strands, fibres, fibrils or filaments and is formed from a material which has the mechanical strength to withstand the stress generated in the material during rotation of the permeable element such that the voidage thereof does not decrease with use.

Preferably each of the permeable element is an annulus and more preferably the axis of each annulus is co-incident with the axis of rotation.

The materials and the structure of the permeable element and, where it is employed, of the rotatable member may be chosen with regard to the nature of the mass transfer occurring therein. For example, where an endothermic reaction occurs in apparatus according to the present invention the permeable element and/or rotatable member, where it is employed, may be provided with heating means, e.g. electrical resistance wires; where an exothermic reaction occurs in apparatus according to the present invention, the permeable element and/or the rotatable member, where it is employed, may be provided with cooling means, e.g. a cooling coil.

The apparatus according to the present invention may be employed in *inter alia* absorption, desorption, counter current extraction, distillation and homogenisation processes.

Absorption processes which may be effected in apparatus according to the present invention may be physical, e.g. absorption of ammonia, nitrogen oxides, or hydrogen chloride in water, or ammonia in brine, or nitrogen oxides in nitric acid; or they may involve a chemical reaction, e.g. absorption of sulphur dioxide in milk of lime to form calcium bisulphite; absorption of oxygen/air mixtures for oxidation of hydrocarbons e.g. cumene, cyclohexane or a xylene; absorption of sulphur trioxide for the sulphonation of organic compounds, particularly $C_{10}$—$C_{20}$ α-olefins; absorption of chlorine or bromine for the chlorination and bromination of paraffins and olefins; absorption of chlorine in caustic soda solution for the preparation of hypochlorite.

Desorption processes which may be effected in the apparatus according to the present invention include *inter alia* removal of a reaction byproduct, e.g. ethylene glycol from a polymerising melt of polyethylene terephthalate "monomer"; deodorisation of natural oils and fats, e.g. cotton seed oil, soyabean oil, corn oil, lard, by treating the oils or fats with steam; volatilisation of organic material from aqueous solution, e.g. removal of acetone from water by air; and, removal of ammonia and carbon dioxide from brine. Often such desorption processes are effected at reduced pressure, typically the reduced pressure is between 1 mm and 10 mm of mercury.

Extractions which may be effected in the apparatus according to the present invention include *inter alia* extraction of benzene, toluene and xylene from naphtha reformate using for example, diethylene glycol or Sulfolane as extractant; dehydration of aqueous hydrogen fluoride and aqueous hydrogen chloride with oleum; extraction of formic acid and acetic acid from the so-called black liquors of the cellulose industry with methyl ethyl ketone.

Distillations which may be effected in apparatus according to the present invention include *inter alia* separation of ethyl benzene from xylenes, separation of $C_2$ hydrocarbons (ethylene from ethane), separation of $C_3$ hydrocarbons (propylene from propane), separation of aromatics, separation of mono-, di- and trimethyl-amines and ethylamines, isopentane separation from light naphtha and propylene oxide/water separation.

Where distillation is effected in apparatus of the apparatus of the present invention it will be appreciated that liquifying means, e.g. a condenser, is required to liquify the vapour discharged from the permeable element and that vaporising means, e.g. a boiler, is required to vaporise a liquid, the vapour of which is to be charged to the permeable element. Preferably a plurality of permeable elements, each with its associated fluid collecting means and preferably supported in a rotatable member, is connected in series and the series provided with ancilliary equipment such as liquifying means and vaporising means, to form a distillation apparatus.

Accordingly the present invention further provides a distillation apparatus comprising a plurality of permeable elements, each with its associated fluid collecting means, connected in series and optionally rotatable about a common axis, vaporising means to vaporise a liquid, the vapour of which is to be charged to the series of permeable elements and liquifying means to liquify a vapour discharged from the said series, characterised in that each permable element has a voidage of at least 90%, comprises strands, fibres, fibrils or filaments and is formed from a material which has the mechanical strength to withstand the stress generated in the material during rotation of the permeable element such that the voidage thereof does not decrease with use.

Where continuous distillation is effected in the aforesaid distillation apparatus the point at which the liquid feed is fed to the distillation apparatus is determined by the composition of the liquid feed. The said point may be readily determined by a man skilled in the art. The lower and higher boiling fractions of the liquid feed flow from the said point via the permeable element to opposite ends of the series where they discharge as a vapour and liquid respectively. The vapour is liquified in a liquifier and a proportion of the liquid is collected and a proportion returned to the said series. A proportion of the liquid discharging from the series of permeable elements is collected and a proportion is vaporised in a vaporising means and the vapour produced is returned to the series of permeable elements.

The distillation apparatus of the present invention may be adapted for so-called "vapour recompression" by which we mean compression of a vapour and extraction of the heat therefrom in a heat exchanger. The vapour discharging from the series of permeable elements is compressed in a compressor and the hot vapour and/or liquid from the compressor is fed via expansion means to a heat exchanger. In the heat exchanger the hot vapour and/or liquid loses heat which is absorbed by a proportion of the liquid discharged from the series of permeable elements, which proportion thus required less heat from the boiler for vaporisation. In this way the overall energy requirements of the distillation apparatus may be reduced. Preferably the compressor is driven by the drive shaft which rotates one or more of the permeable elements.

The invention will be further described by reference to the accompanying drawings which show, by way of example only, apparatus for effecting mass transfer between two fluid phases according to the present invention.

Figure 1 is a longitudinal cross-section of a gas-absorber;

Figure 2 is a transverse cross-section on a different scale on the line AA of Figure 1;

Figure 3 is a diagrammatic representation of a continuous distillation apparatus according to the invention;

Figure 4 is a diagrammatic representation of the apparatus shown in Figure 3 adapted for vapour recompression.

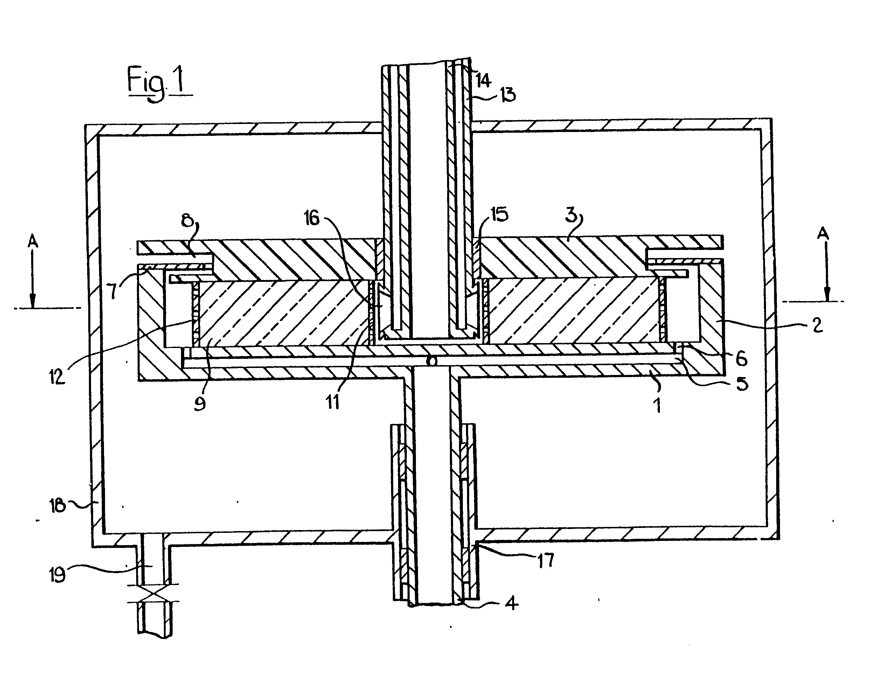

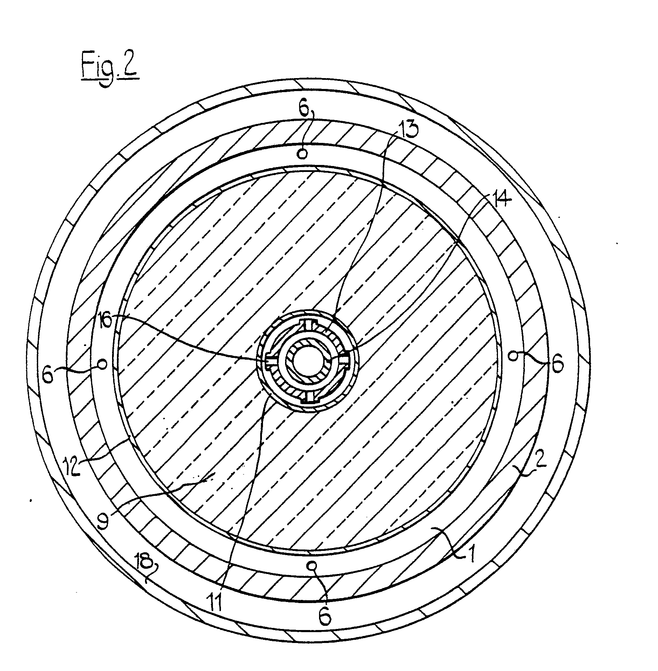

In Figures 1 and 2 a hollow disc having a stainless steel base 1 and wall 2 and a perspex lid 3 bolted to the wall 2 is provided with a hollow shaft 4. The hollow shaft 4 communicates with four radial channels 5 in the base 1 which lead to ports 6 through which a fluid may flow. The wall 2 is provided with a lip 7 which engages with an annular groove 8 in the lid 3. An annulus 9 of metallic skeleton foam, typically Retimet 80 supported in the hollow disc between the base and the lid by a radially inwardly disposed wire mesh 11 and a radially outwardly disposed wire mesh 12 forms an annular permeable element. Two concentric tubes 13 and 14 project through the lid 3 via a gas-tight seal 15. The outer tube 13 communicates with four fan sprays 16 through which a fluid may be fed to the annulus 9. The hollow shaft 4 is rotatably mounted on roller bearings in a bearing housing 17 which is attached to a stationary fluid-collecting means in the form of a housing of stainless steel 18 provided with a port 19. An electric motor (not shown) provides the drive to the hollow shaft in a "vee" belt drive.

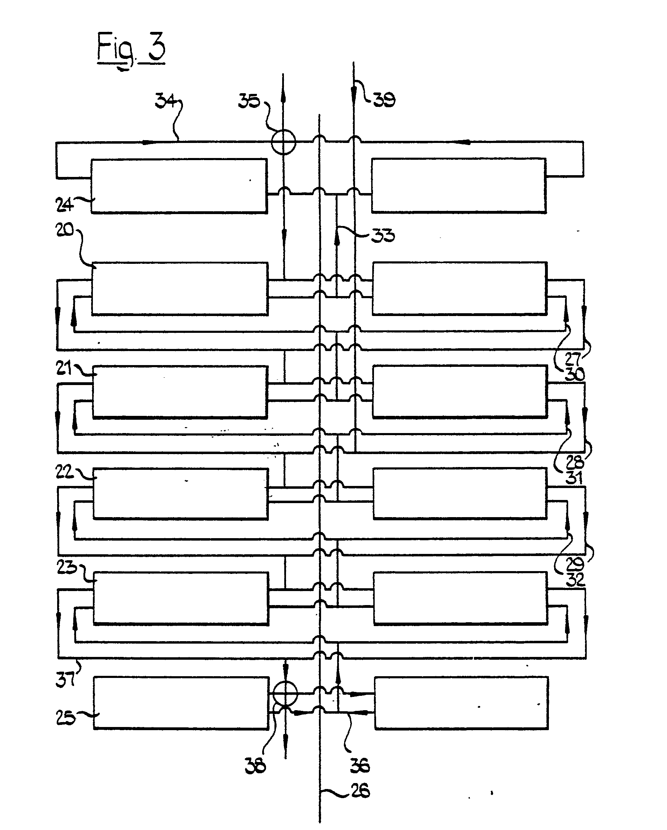

In operation, the hollow disc is rotated, a liquid is fed via the tube 13 to the metallic skeleton foam 9, moves radially outward through the foam 9, to fill the space between the wire mesh 12 and the wall 2 and is expelled through the passage defined by the lip 7 and the groove 8. A gas is fed into the apparatus through the hollow shaft 4 and the channels 6 and enters the annular space between the wall 2 and the wire mesh 12. The liquid in the space between the wall 2 and the outer mesh 12 prevents escape of gas at the wall 2 and the gas is forced through the pores of the permeable element counter-current to the liquid to escape via the tube 14. The liquid collects in the housing 18 and may be run off through port 19 as desired. In Figure 3, a stack of stationary housings 20, 21, 22, 23, a condenser 24 and a boiler 25, are mounted about a drive shaft 26. The drive shaft 26 rotates permeable elements supported in rotatable members (not shown) mounted within the housings 20, 21, 22 and 23. Liquid lines 27, 28, 29 and vapour lines 30, 31, 32 provided with suitable pumps (not shown) interconnect adjacent housings. A vapour line 33 and a liquid line 34 fitted with a splitter 35 connect the condenser 24 to the stack of housings. A vapour line 36 and a liquid line 37 fitted with a splitter 38 connect the boiler 25 to the stack of housings. A feed line 39 is attached to the liquid line 28.

In operation the drive shaft 26 is rotated by a motor (not shown). Feed liquid enters the distillation apparatus through feed line 39, mixes with the liquid in line 28 and is forced radially outward through the permeable element in housing 22 while contacting the vapour flowing radially inward through the permeable element in housing 22. A proportion of the lower boiling fraction in the feed liquid is stripped and moves with the vapour through line 31 to the permeable element in housing 21 while the higher boiling fraction moves the liquid through line 29 to the permeable element in housing 23. The higher boiling fraction discharged from housing 23 flows through line 37, a proportion is run off through the splitter 38 to a storage tank and the remainder is fed to boiler 25. The vapour issuing from boiler 25 passes through line 36 to the permeable element in housing 23. The vapour flows through the permeable elements until the lower boiling fraction is discharged into line 33 and then flows to the condenser 24. The liquid issuing from the condenser passes through line 34, a proportion of it is run off through splitter 35 to a storage tank and the remainder is returned to the stack of housings.

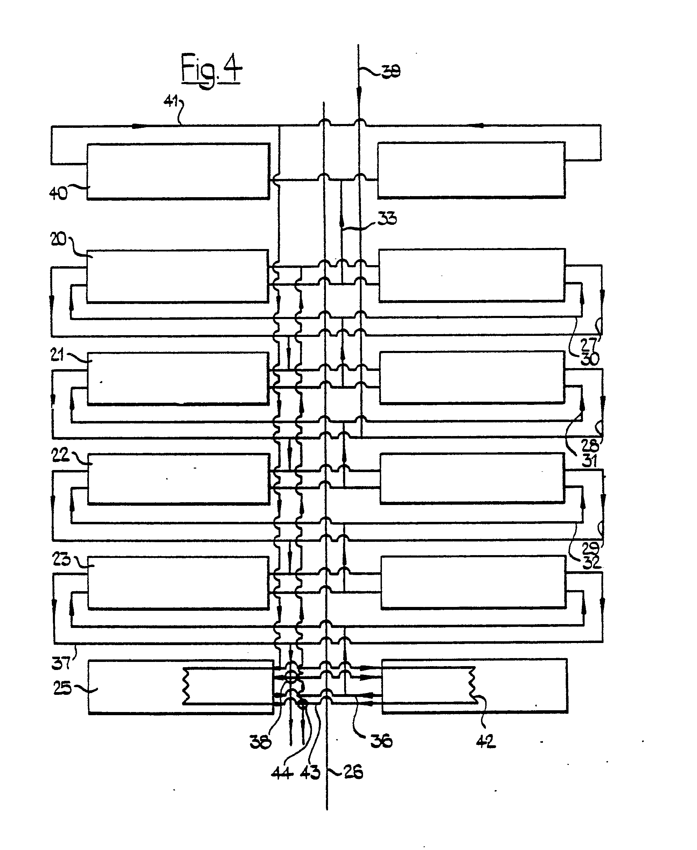

In Figure 4 a compressor 40 is mounted on the drive shaft 26. A vapour line 33 and a liquid line 41 connect the compressor to the stack of housings and to a heat exchanger 42 respectively. A liquid line 43, fitted with a splitter 44, connects the heat exchanger 42 to the stack of housings.

In operation the lower boiling fraction is discharged from the stack of housings and passes through line 33 to compressor 40 where it is compressed to form a liquid. The liquid passes through line 41 to the heat exchanger 42 where it loses heat which is absorbed by the higher boiling fraction. The cooled liquid from the heat exchanger passes through line 43, a proportion of it is run off through splitter 44 to a storage tank and the remainder is returned to the stack of housings.

Example 1

An annular permeable element of internal radius 4.75 cm, external radius 9 cm and depth 2.54 cm, formed from Retimet 45 (interfacial area 2400 m²/m³; voidage 96%) was mounted in a hollow disc as illustrated in Figures 1 and 2. The disc was rotated at 1450 rpm while deoxygenated water at a flow rate of $16.7 \times 10^{-5}$ m³ sec⁻¹ was delivered to the hollow disc to flow radially outwards through the pores of the Retimet 45 and air at a flow rate of $16.7 \times 10^{-4}$ m³ sec⁻¹ was delivered to the hollow disc to flow radially inwards. The concentration of oxygen in the water charged to and discharged from the hollow disc was measured using a dissolved oxygen probe. The so-called "volumetric mass transfer co-efficients" $K_l a$ were calculated using the equation:

$$K_L a = \frac{Q}{V} \ln \frac{C_{e1} - C_1}{C_{e1} - C_2}$$

where

$K_L$=Mass transfer coefficient for liquid film controlled mass transfer (m s⁻¹);

Q=Volumetric flow rate of water (m³ s⁻¹)

V=Volume occupied by the permeable element (m³),

$C_1$=Concentration of oxygen in the charging water,

$C_2$=Concentration of oxygen in the discharging water,

$C_{e1}$=Equilibrium concentration of oxygen in water at ambient temperature,

a=Interfacial area of permeable element (m⁻¹)

Further runs were carred out at increasing rotational speeds and the results are given in Table 1.

TABLE 1

| Volumetric mass transfer coefficients v mean acceleration | | |
|---|---|---|
| Rotational speed rpm | Mean acceleration m sec$^{-2}$ | Volumetric M.T. Coeff. $K_La$ (sec$^{-1}$) |
| 1450 | 1660 | 1.040 |
| 2200 | 3820 | 1.070 |
| 2550 | 5133 | 1.070 |
| 2950 | 6869 | 1.135 |
| 3350 | 8858 | 1.730 |

Example 2

An annular permeable element (of internal radius 4.5 cm, external radius 9.2 cm, depth 2.54 cm, depth 1.27 cm) formed from Retimet 80, interfacial area 5600 metres$^2$/metres$^3$, equivalent diameter of strands 80 microns, was mounted in a hollow disc as shown in Figures 1 and 2. The disc was rotated at 2000 rpm while deoxygenated water at a flow rate of $8.33 \times 10^{-5}$ m$^3$ sec$^{-1}$ and air at a flow rate $8.33 \times 10^{-4}$ m$^3$ sec$^{-1}$ were charged to the permeable element as in Example 1. The concentration of oxygen in the charging and discharging waters was measured as in Example 1 and the volumetric mass transfer coefficient was calculated using the formula in Example 1. The volumetric mass transfer coefficient was found to be 1.503 sec$^{-1}$.

Example 3

Example 2 was repeated using an annular permeable element formed from Retimet 45, interfacial area 2400 m$^2$/m$^3$, equivalent diameter of strands 160 microns. The volumetric mass transfer coefficient was found to be 0.795 sec$^{-1}$.

**Claims**

1. Rotary apparatus for effecting mass transfer between two fluid phases, at least the first of which is a liquid, which apparatus comprises a permeable element (a) which allows passage of the fluids through the pores thereof, the wall surfaces of the pores providing a tortuous and substantially continuous path over which the fluids may flow with the first fluid flowing away from the axis of rotation means (4, 13) to charge the fluids to the permeable element and means (14, 19) to discharge at least one of the fluids or a derivative thereof from the permeable element characterised in that the permeable element has a voidage of at least 90%, comprises strands, fibres, fibrils or filaments which are point-bonded at nodules and is formed from a material which has the mechanical strength to withstand the stress generated in the material during rotation of the permeable element such that the voidage thereof does not decrease with use.

2. Rotary apparatus as claimed in claim 1 wherein the permeable element is formed from a relatively rigid reticulate foam.

3. Rotary apparatus as claimed in claim 2 wherein the permeable element is formed from a metallic skeleton foam.

4. Rotary apparatus as claimed in any one of the preceding claims wherein the permeable element has a voidage of at least 93%.

5. Rotary apparatus as claimed in any one of the preceding claims wherein the permeable element has an inerfacial area of at least 1000 metres$^2$/metres$^3$.

6. Rotary apparatus as claimed in claim 5 wherein the permeable element has an interfacial area of at least 1500 metres$^2$/metre$^3$.

7. Rotary apparatus as claimed in any one of the preceding claims wherein the strands, fibres, fibrils or filaments have an equivalent diameter of less than 150 microns.

8. Rotary apparatus as claimed in any one of the preceding claims wherein the permeable element is disposed in a rotatable member.

9. Rotary apparatus as claimed in any one of the preceding claims wherein the permeable element is formed from a chemically resistant metal.

10. Rotary apparatus as claimed in any one of the preceding claims and adapted for distillation, said apparatus including a plurality of permeable elements mounted in series and being provided with vaporising means to vaporise a liquid the vapour of which is charged to the said series and liquifying means to liquify a vapour discharged from the said series.

11. Rotary apparatus as claimed in claim 1 wherein the vaporising means and the liquifying means are rotatably mounted about a common axis.

12. Rotary apparatus as claimed in claim 10 or 11 wherein the liquifying means is a compressor and a heat exchanger is connected to the compressor and to the vaporising means, the apparatus being adapted and arranged such that vapour from a first permeable element is condensed to a first liquid in the compressor from where it is transferred to the heat exchanger where it loses heat to a second liquid which is to be vaporised in the vaporising means.

13. Use of rotary apparatus as claimed in any one of the preceding claims for effecting mass transfer between two fluid phases.

**Patentansprüche**

1. Umlaufende Vorrichtung zum Bewirken eines Stoffübergangs zwischen zwei Fluidphasen, von denen mindestens die erste eine Flüssigkeit ist, wobei diese Vorrichtung

ein durchlässiges Bauteil (9), das einen Durchfluß der Fluide durch seine Poren ermöglicht, wobei die Wandoberflächen der Poren einen gewundenen und im wesentlichen kontinuierlichen Weg zur Verfügung stellen, über den die Fluide fließen können, wobei das erste Fluid von der Drehachse wegfließt,

eine Einrichtung (4, 13) zum Beschicken des durchlässigen Bauteils mit den Fluiden

und eine Einrichtung (14, 19) zum Ablassen mindestens eines der Fluide oder eines Derivats davon aus dem durchlässigen Bauteil enthält,

dadurch gekennzeichnet, daß das durchlässige Bauteil einen Hohlraumanteil von mindestens 90% hat, Faserbündel, Fasern, Fibrillen oder Einzel- bzw. Endlosfäden enthält, die an Knoten punktförmig verbunden sind, und aus einem Material gebildet ist, das die mechanische Festigkeit hat, um der Spannung, die während der Umlaufbewegung des durchlässigen Bauteils in dem Material erzeugt wird, derart standzuhalten, daß sein Hohlraumanteil bei der Anwendung nicht abnimmt.

2. Umlaufende Vorrichtung nach Anspruch 1, bei der das durchlässige Bauteil aus einem relativ starren, netzartigen Schaum gebildet ist.

3. Umlaufende Vorrichtung nach Anspruch 2, bei der das durchlässige Bauteil aus einem metallischen Gerüstschaum gebildet ist.

4. Umlaufende Vorrichtung nach einem der vorhergehenden Ansprüche, bei der das durchlässige Bauteil einen Hohlraumanteil von mindestens 93% hat.

5. Umlaufende Vorrichtung nach einem der vorhergehenden Ansprüche, bei der das durchlässige Bauteil eine Grenzfläche je Volumeneinheit von mindestens 1000 Meter$^2$/Meter$^3$ hat.

6. Umlaufende Vorrichtung nach Anspruch 5, bei der das durchlässige Bauteil eine Grenzfläche je Volumeneinheit von mindestens 1500 Meter$^2$/Meter$^3$ hat.

7. Umlaufende Vorrichtung nach einem der vorhergehenden Ansprüche, bei der die Faserbündel, Fasern, Fibrillen oder Einzel- bzw. Endlosfäden einen äquivalenten Durchmesser von weniger als 150 μm haben.

8. Umlaufende Vorrichtung nach einem der vorhergehenden Ansprüche, bei der das durchlässige Bauteil in einem drehbaren Bauglied angeordnet ist.

9. Umlaufende Vorrichtung nach einem der vorhergehenden Ansprüche, bei der das durchlässige Bauteil aus einem chemisch beständigen Metall gebildet ist.

10. Umlaufende Vorrichtung nach einem der vorhergehenden Ansprüche, die für die Destillation geeignet ist, wobei die erwähnte Vorrichtung eine Vielzahl von in Reihe angebrachten durchlässigen Bauteilen enthält und mit einer Verdampfungseinrichtung zum Verdampfen einer Flüssigkeit, mit deren Dampf die erwähnte Reihe beschickt wird, und mit einer Verflüssigungseinrichtung zum Verflüssigen eines aus der erwähnten Reihe abgelassenen Dampfes ausgestattet ist.

11. Umlaufende Vorrichtung nach Anspruch 1, bei der die Verdampfungseinrichtung und die Verflüssigungseinrichtung um eine gemeinsame Achse herum drehbar angebracht sind.

12. Umlaufende Vorrichtung nach Anspruch 10 oder 11, bei der die Verflüssigungseinrichtung ein Verdichter ist und ein Wärmetauscher mit dem Verdichter und der Verdampfungseinrichtung verbunden ist, wobei die Vorrichtung derart eingerichtet und angeordnet ist, daß Dampf aus einem ersten durchlässigen Bauteil in dem Verdichter zu einer ersten Flüssigkeit kondensiert wird, von wo sie in den Wärmetauscher übergeführt wird, wo sie an eine zweite Flüssigkeit, die in der Verdampfungseinrichtung verdampft werden soll, Wärme abgibt.

13. Verwendung der umlaufenden Vorrichtung nach einem der vorhergehenden Ansprüche zum Bewirken eines Stoffübergangs zwischen zwei Fluidphasen.

**Revendications**

1. Appareil rotatif pour effectuer un transfert de masse entre deux phases fluides dont au moins la première est un liquide, lequel appareil comprend un élément perméable (a) qui permet le passage des fluides à travers ses pores, les surfaces de paroi des pores établissant un trajet sinueux et sensiblement continu sur lequel les fluides peuvent s'écouler, le premier fluide s'éloignant de l'axe de rotation, des moyens (4, 13) destinés à charger les fluides vers l'élément perméable et des moyens (14, 19) destinés à décharger au moins l'un des fluides ou un dérivé de ceux-ci de l'élément perméable, caractérisé en ce que l'élément perméable présente une porosité d'au moins 90%, comprend des fils, des fibres, des fibrilles ou des filaments qui sont liés par points en nodules et est formé d'une matière qui possède la résistance mécanique pour supporter la contrainte générée dans la matière pendant la rotation de l'élément perméable afin que sa porosité ne diminue pas avec l'utilisation.

2. Appareil rotatif selon la revendication 1, dans lequel l'élément perméable est formé d'une mousse réticulée relativement rigidé.

3. Appareil rotatif selon la revendication 2, dans lequel l'élément perméable est formé d'une mousse à squelette métallique.

4. Appareil rotatif selon l'une quelconque des revendications précédentes, dan lequel l'élément perméable présente une porosité d'au moins 93%.

5. Appareil rotatif selon l'une quelconque des revendications précédentes, dans lequel l'élément perméable présente une surface interfaciale d'au moins 100 m$^2$/m$^3$.

6. Appareil rotatif selon la revendication 5, dans lequel l'élément perméable présente une surface interfaciale d'u moins 1500 m$^2$/m$^3$.

7. Appareil rotatif selon l'une quelconque des revendications précédentes, dans lequel les fils, fibres, fibrilles ou filaments ont un diamètre équivalent de moins de 150 micromètres.

8. Appareil rotatif selon l'une quelconque des revendications précédentes, dans lequel l'élément perméable est disposé dans un élément rotatif.

9. Appareil rotatif selon l'une quelconque des revendications précédentes, dans lequel l'élément perméable est formé d'un métal chimiquement résistant.

10. Appareil rotatif selon l'une quelconque des revendications précédentes conçu pour une distillation, ledit appareil comprenant plusieurs éléments perméables montés en série et étant équipé de moyens de vaporisation destinés à vaporiser un liquide dont la vapeur est chargée vers ladite série et de moyens de liquéfaction destinés à liquéfier une vapeur déchargée de ladite série.

11. Appareil rotatif selon la revendication 1, dans lequel les moyens de vaporisation et les moyens de liquéfaction sont montés de façon à pouvoir tourner sur un axe commun.

12. Appareil rotatif selon la revendication 10 ou 11, dans lequel les moyens de liquéfaction comprennant un compresseur et un échangeur de chaleur est raccordé au compresseur et au moyens de vaporisation, l'appateil étant conçu et agencé de manière qu'une vapeur provenant d'une premier élément perméable soit condensé en un premier liquide dans le compresseur d'où elle est transférée vers l'échangeur de chaleur où elle cède de la chaleur à un second liquide devant être vaporisé dans les moyens de vaporisation.

13. Utilisation de l'appareil rotatif selon l'une quelconque des revendications précédentes pour effectuer un transfert de masse entre deux phases fluides.

Fig.1

Fig.2

Fig. 3

Fig.4